# EUROPÄISCHE PATENTANMELDUNG

(11) **EP 4 749 333 A1**
(43) Veröffentlichungstag der Anmeldung: **27.05.2026**
(21) Anmeldenummer: 25211974.8
(22) Anmeldetag: 29.10.2025
(51) Int. Cl.: G01V 8/12, G01V 8/20, F16P 3/14, G01D 11/30, G01V 8/00, G02B 7/00

(54) **SENSORANORDNUNG**

(30) Priorität: 25.11.2024 DE 202024106791 U
(71) Anmelder: Leuze electronic GmbH + Co. KG, 73277 Owen/Teck (DE)
(72) Erfinder: Stehle, Markus, 72587 Römerstein (DE); Eschenbächer, Gerd, 73061 Ebersbach (DE)
(74) Vertreter: Ruckh, Rainer Gerhard

(57) **Zusammenfassung**

Die Erfindung betrifft eine Sensoranordnung (100) mit einem ein Gehäuse (2) aufweisenden Sensor (1) und mit einer Befestigungsvorrichtung, mittels derer der Sensor (1) an einer Unterlage befestigbar ist. Der Sensor (1) weist einen Gehäuseabschnitt mit einer kreiszylindrischen Außenkontur auf, wobei die Befestigungsvorrichtung einen Befestigungsabschnitt mit einem Durchgangsloch (7,9) aufweist, in welchem der Gehäuseabschnitt mit Spiel gelagert ist. Zwei jeweils einen konvexen Anlageabschnitt (10) aufweisende Muttern (4,5) sind vorhanden, die beidseits des Befestigungsabschnitts mit einstellbarem Abstand zueinander auf dem Gehäuseabschnitt gelagert sind, wobei die konvexen Anlageabschnitte (10) am Befestigungsabschnitt anliegen. Bei geringem Anpressdruck der Anlageabschnitte (10) am Befestigungsabschnitt ist der Sensor (1) am Befestigungsabschnitt lageverstellbar. Durch Festklemmen des Befestigungsabschnitts zwischen den Anlageabschnitten (10) ist der Sensor (1) lagefixiert. Wenigstens eine der Muttern (4,5) weist ein Schnappgewinde auf.

## Beschreibung

Die Erfindung betrifft eine Sensoranordnung.

Derartige Sensoranordnungen umfassen einen Sensor und eine Befestigungsvorrichtung, mittels derer der Sensor an einer Unterlage befestigt werden kann.

Die Sensoren dienen generell zur Erfassung von Objekten in einem bestimmten Überwachungsbereich. Beispiele für derartige Sensoren sind optische Sensoren wie Reflexionslichtschranken, Lichttaster, Lichtschranken und dergleichen. Generell weisen diese Sensoren wenigstens ein Gehäuse auf, in welchem die entsprechenden Sensorkomponenten integriert sind. Optische Sensoren weisen als Sensorkomponenten typisch wenigstens einen Lichtstrahlen emittierenden Sender und einen Lichtstrahlen empfangenden Empfänger auf.

Bei einem Einsatz des Sensors in industriellen Umgebungen muss dieser Sensor vor Inbetriebnahme an einer Anlage, einer Maschine oder dergleichen befestigt und dabei in geeigneter Weise justiert, d.h. ausgerichtet werden, damit der Sensor den gewünschten Bereich überwachen kann.

Zur Befestigung des Sensors an einem Einsatzort ist dabei eine Befestigungsvorrichtung vorgesehen, die typischerweise von einem Befestigungswinkel gebildet sein kann. Zur Ausrichtung des Sensors kann zusätzlich eine Justageplatte vorgesehen werden, die beispielsweise durch das Vorsehen von Langlöchern eine Einstellmöglichkeit des Sensors liefert. Nachteilig hierbei ist, dass bei derartigen Ausrichthilfen der Sensor nicht in mehreren Raumrichtungen gleichzeitig einstellbar ist. Vielmehr muss zur Ausrichtung des Sensors in jeder Raumrichtung ein separater Ausrichtvorgang durchgeführt werden. Bei jedem dieser Justagevorgänge muss nach erfolgter Ausrichtung ein Befestigungselement betätigt werden, beispielsweise Schrauben in Langlöchern der Justageplatte festgezogen werden. Der Justagevorgang wird dadurch unerwünscht umständlich und zeitaufwändig.

Eine gattungsgemäße Sensoranordnung ist aus der EP 2 551 533 B1 bekannt. Diese umfasst einen Sensor mit einem Sensorkomponenten aufnehmenden Gehäuse, einem an dem Gehäuse angeordneten zylindrischen Abschnitt mit einem Befestigungsgewinde, sowie ein Befestigungselement zur Befestigung des Sensors an einem Einsatzort und einer Ausrichthilfe für den Sensor. Die Ausrichthilfe weist zwei ballige Kontermuttern auf, die auf dem Befestigungsgewinde angebracht sind. Eine Ausgleichsscheibe ist vorhanden, welche mit dem Befestigungselement zwischen den Kontermuttern auf dem zylindrischen Abschnitt mit Spiel gelagert sind. Das Befestigungselement und die Ausgleichsscheibe weisen jeweils ein kreisförmiges Durchgangsloch auf, dessen Durchmesser jeweils größer als der Außendurchmesser des zylindrischen Abschnitts ist. Jede Kontermutter weist eine konvex gekrümmte Außenmantelfläche auf, wobei die gekrümmten Segmente der Außenmantelflächen der Kontermuttern dem Befestigungselement und der Ausgleichsscheibe zugewandt sind und an diesen anliegen. Wenigstens eine Kontermutter weist ein mit dem Befestigungsgewinde in Eingriff stehendes Innengewinde auf. Die Ausgleichsscheibe bildet ein gegenüber dem Befestigungselement frei bewegliches Teil. Eine Neigungsposition des zylindrischen Abschnitts zum Befestigungselement ist in zwei Raumrichtungen gleichzeitig einstellbar und durch Anziehen der Kontermuttern gegen das Befestigungselement und die Ausgleichsscheibe fixierbar.

Der Erfindung liegt die Aufgabe zugrunde, eine Sensoranordnung mit erweiterter und verbesserter Funktionalität bereitzustellen.

Zur Lösung dieser Aufgabe sind die Merkmale des Anspruchs 1 vorgesehen. Vorteilhafte Ausführungsformen und zweckmäßige Weiterbildungen der Erfindung sind in den abhängigen Ansprüchen beschrieben.

Die Erfindung betrifft eine Sensoranordnung mit einem ein Gehäuse aufweisenden Sensor und mit einer Befestigungsvorrichtung, mittels derer der Sensor an einer Unterlage befestigbar ist. Der Sensor weist einen Gehäuseabschnitt mit einer kreiszylindrischen Außenkontur auf, wobei die Befestigungsvorrichtung einen Befestigungsabschnitt mit einem Durchgangsloch aufweist, in welchem der Gehäuseabschnitt mit Spiel gelagert ist. Zwei jeweils einen konvexen Anlageabschnitt aufweisende Muttern sind vorhanden, die beidseits des Befestigungsabschnitts mit einstellbarem Abstand zueinander auf dem Gehäuseabschnitt gelagert sind, wobei die konvexen Anlageabschnitte am Befestigungsabschnitt anliegen. Bei geringem Anpressdruck der Anlageabschnitte am Befestigungsabschnitt ist der Sensor am Befestigungsabschnitt lageverstellbar. Durch Festklemmen des Befestigungsabschnitts zwischen den Anlageabschnitten ist der Sensor lagefixiert. Wenigstens eine der Muttern weist ein Schnappgewinde auf.

Ein wesentlicher Aspekt der Erfindung besteht darin, dass die Befestigungsvorrichtung nicht nur zur Befestigung des Sensors an einer Unterlage dient. Vielmehr kann der Sensor an der Befestigungsvorrichtung in zwei Raumrichtungen gleichzeitig ausgerichtet werden, wodurch eine hohe Funktionalität der Sensoranordnung erhalten wird.

Wesentliche Elemente für die Justage des Sensors sind zwei Muttern, die auf einem kreiszylindrischen Gehäuseabschnitt des Sensors so gelagert sind, dass deren Abstand zueinander eingestellt werden kann. Dabei weisen die Muttern konvexe Anlageabschnitte auf, wobei vorteilhaft der Anlageabschnitt jeder Mutter eine Kugelfläche oder eine asphärische Fläche aufweist.

Die Anlageabschnitte weisen somit eine räumlich gekrümmte Oberfläche auf.

Die Befestigungsvorrichtung weist einen Befestigungsabschnitt mit einem Durchgangsloch auf. In diesem Durchgangsloch liegt der Gehäuseabschnitt des Sensors mit Spiel.

Die konvexen Anlageabschnitte der Muttern liegen beidseits der Befestigungsabschnitte, so dass deren Anlageabschnitte an gegenüberliegenden, das Durchgangsloch begrenzenden Randbereichen des Befestigungsabschnitts anliegen.

Gemäß einer vorteilhaften Ausführungsform ist der Befestigungsabschnitt von einem Schenkel eines Befestigungswinkels mit einer darauf gelagerten Ausgleichsscheibe gebildet, wobei die Ausgleichsscheibe relativ zu dem Schenkel beweglich ist.

Der Befestigungswinkel und die Ausgleichsscheibe sind vorteilhaft plattenförmig, d.h. sie weisen die Form von flachen, flächigen Quadern auf. Die Ausgleichsscheibe liegt dabei flächig auf einer Seite des Befestigungswinkels auf und ist so beweglich, dass sie Ausgleichsbewegungen derart durchführen kann, dass sie auf dem Befestigungswinkel aufliegend verschoben werden kann.

Liegen die Anlageabschnitte der Muttern mit geringem Anpressdruck am Befestigungsabschnitt, kann die Orientierung des Sensors durch eine Taumelbewegung des Gehäuseabschnitts im Durchgangsloch des Befestigungsabschnitts kontinuierlich in zwei Raumrichtungen verstellt werden, wobei diese Justage von einer Bedienperson einfach durchgeführt und kontrolliert werden kann.

Ist der Befestigungsabschnitt vom Befestigungswinkel und der Ausgleichsscheibe gebildet, führt die Ausgleichsscheibe bei einer Neigungsverstellung des Sensors eine Ausgleichsbewegung gegen den Befestigungswinkel aus, so dass die eingestellte Neigung erhalten bleibt.

Ist die gewünschte Neigung des Sensors eingestellt, werden die Muttern gegeneinander fest angezogen, so dass der dazwischen liegende Befestigungsabschnitt eingeklemmt wird und so der Sensor in der gewünschten Neigungseinstellung lagegesichert ist.

Die Muttern sind hierzu auf einem Außengewinde des Gehäuseabschnitts gelagert und können so durch Schraubbewegungen in ihren Positionen relativ zueinander eingestellt werden. Wenigstens eine der Muttern weist hierzu ein Innengewinde auf.

Erfindungsgemäß weist wenigstens eine Mutter ein Schnappgewinde auf, welches das Innengewinde ausbildet und welches zwischen einer Öffnungs- und Schließstellung bewegt werden kann. Dadurch wird die Montage der Sensoranordnung erheblich vereinfacht, da die Mutter nicht zeitaufwändig auf das Außengewinde aufgeschraubt werden muss, sondern bei geöffnetem Schnappgewinde auf das Außengewinde aufgeschoben werden kann, bis sich die Mutter in der gewünschten Position befindet. Dann wird das Schnappgewinde in eine Schließstellung überführt, so dass das Schnappgewinde in Eingriff mit dem Außengewinde des Gehäuseabschnitts ist.

Gemäß einer ersten Variante der Erfindung bildet eine erste Mutter eine auf dem Gehäuseabschnitt gelagerte vormontierte Einheit mit dem Gehäuse des Sensors, eine weitere Mutter weist ein Schnappgewinde auf.

In diesem Fall ist die erste Mutter fest mit dem Gehäuseabschnitt verbunden, insbesondere auf diesem aufgeschraubt. Die zweite Mutter ist mit dem Schnappgewinde positionsverstellbar auf dem Gehäuseabschnitt lagerbar.

Eine Abstandsverstellung zwischen den Muttern erfolgt somit nur durch eine Bewegung der zweiten Mutter mit dem Schnappgewinde auf dem Gehäuseabschnitt.

Gemäß einer zweiten Variante der Erfindung sind zwei Muttern mit jeweils einem Schnappgewinde vorhanden.

In diesem Fall sind beide Muttern auf dem Gehäuseabschnitt positionsverstellbar.

Gemäß einer vorteilhaften Ausführungsform der Erfindung weist die oder jede Mutter mit Schnappgewinde einen Grundkörper auf, an welchem wenigstens ein Gewindeflügel klappbar gelagert ist, in dessen Innenseite ein Innengewinde vorhanden ist.

Der Gewindeflügel mit seinem Innengewinde bildet das Schnappgewinde der Mutter aus, in dem in einer Öffnungsstellung des Gewindeflügels die Mutter auf das Außengewinde des Gehäuseabschnitts aufschiebbar ist. In einer Schließstellung des Gewindeflügels ist das Schnappgewinde in Eingriff mit dem Außengewinde des Gehäuseabschnitts.

Vorteilhaft liegt der Gewindeflügel in seiner Schließstellung in einer Aussparung des Grundkörpers.

Der in der Aussparung liegende Gewindeflügel fluchtet dann mit dem Grundkörper der Mutter.

Die Geometrie des Schnappgewindes ist derart ausgebildet, dass sich der Gewindeflügel in Umfangsrichtung der Mutter erstreckt.

Dabei ist ein längsseitiges Ende des Gewindeflügels mittels eines Gelenks an den Grundkörper angebunden ist.

Vorteilhaft ist das Gelenk ein Filmscharnier.

Der Gewindeflügel kann somit durch Aufklappen in die Öffnungsstellung und durch Zuklappen in die Schließstellung einfach und schnell überführt werden.

Weiter vorteilhaft ist am freien längsseitigen Ende des Gewindeflügels ein Verriegelungselement vorhanden, mittels dessen der Gewindeflügel in der Schließstellung am Grundkörper lagegesichert ist.

Insbesondere ist das Verriegelungselement ein Rasthaken.

Der Rasthaken verhindert ein unkontrolliertes Aufklappen des Schnappgewindes.

Gemäß einer vorteilhaften Weiterbildung weist die Mutter zwei an deren Grundkörper gegeneinander klappbare Gewindeflügel auf.

Vorteilhaft sind die Gewindeflügel identisch ausgebildet.

Dabei sind in einer Schließstellung die Gewindeflügel in eine in Umfangsrichtung des Grundkörpers verlaufende Aussparung eingeklappt, wobei sich die Aussparung wieder in Umfangsrichtung der Mutter erstreckt.

Da an jedem Gewindeflügel ein Innengewinde vorhanden ist, ergänzen sich beide Gewindeflügel zu einem in Umfangsrichtung verlaufenden größeren Gesamtgewinde, was den Halt der Mutter mit dem Schnappgewinde am Außengewinde des Gehäuseabschnitts weiter verbessert.

Gemäß einer vorteilhaften Ausgestaltung weist der Grundkörper der oder jeder Mutter einen Rahmen auf.

Dabei ist die Außenkontur des Rahmens für eine Betätigung mit einem Maulschlüssel ausgebildet.

Der Rahmen sorgt für eine Stabilisierung der Mutter. Zudem erlaubt die Ausgestaltung des Rahmens eine Betätigung der Mutter mit einem Maulschlüssel.

Gemäß einer vorteilhaften Ausführungsform besteht jede Mutter aus Kunststoff.

Insbesondere ist der Kunststoff Polyamid oder Polyoxymethylen.

Die Mutter mit dem Schnappgewinde und insbesondere der oder die Gewindeflügel, die jeweils über ein Gelenk, insbesondere ein Filmscharnier an den Grundkörper der Mutter angebunden sind, können aus nur einem Kunststoff-Spritzgussteil bestehen.

Vorteilhaft weist der Sensor ein Gehäuse in Form einer zylindrischen Rundhülse auf.

Alternativ weist der Sensor ein kubisches Gehäuse mit einem daran gelagerten zylindrischen Gehäuseansatz auf, an welchem der Gehäuseabschnitt vorhanden ist.

Bei der erfindungsgemäßen Sensoranordnung kann der Sensor ein optischer Sensor, ein Ultraschallsensor oder ein induktiver Sensor sein.

Die Erfindung wird im Folgenden anhand der Zeichnungen erläutert. Es zeigen:
- Figur 1:: Draufsicht auf ein Ausführungsbeispiel der erfindungsgemäßen Sensoranordnung.
- Figur 2:: Seitenansicht der Sensoranordnung gemäß Figur 1.
- Figur 3:: Vergrößerte Darstellung eines Details von Figur 2.
- Figur 4:: Einzeldarstellung einer Mutter mit Schnappgewinde der Sensoranordnung gemäß den Figuren 1 bis 3.
- Figur 5:: Darstellung der Mutter gemäß Figur 4 mit geöffnetem Schnappgewinde in einer ersten perspektivischen Darstellung.
- Figur 6:: Darstellung der Mutter gemäß Figur 4 mit geöffnetem Schnappgewinde in einer zweiten perspektivischen Darstellung.
- Figur 7:: Weiteres Ausführungsbeispiel eines Sensors für die erfindungsgemäße Sensoranordnung.

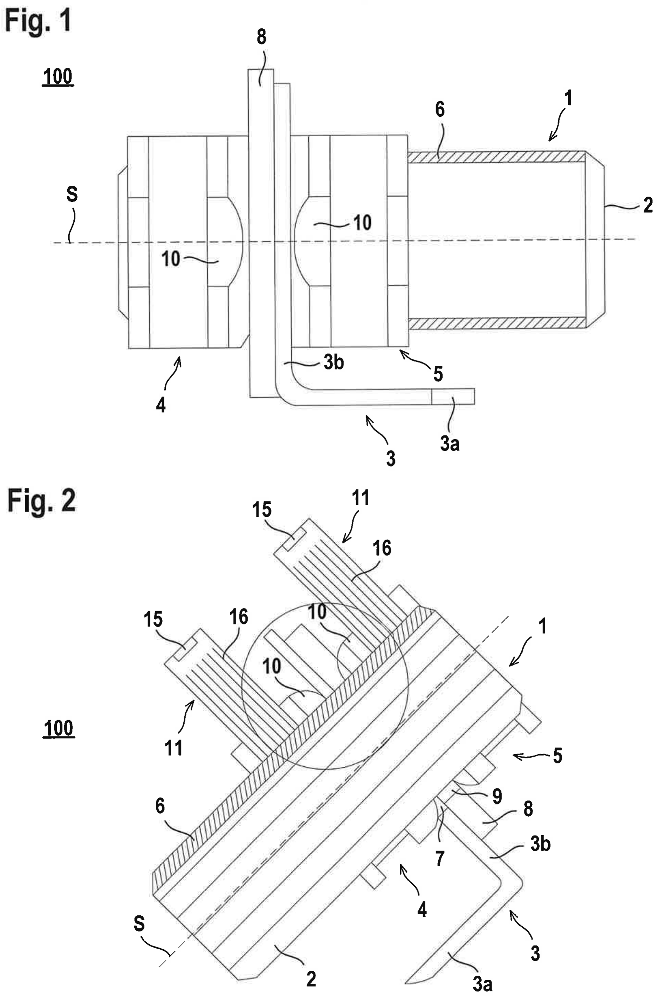

Die Figuren 1 und 2 zeigen ein Ausführungsbeispiel der erfindungsgemäßen Sensoranordnung 100.

Die Sensoranordnung 100 umfasst einen Sensor 1 mit einem Gehäuse 2 in Form einer Rundhülse, d.h. eines hohlzylindrischen Körpers. Der Sensor 1 kann prinzipiell als induktiver Sensor, Ultraschallsensor oder dergleichen ausgebildet sein. Im vorliegenden Fall ist der Sensor 1 als optischer Sensor ausgebildet, spezifisch als Lichttaster. Bei einem derartigen Lichttaster sind als Sensorkomponenten ein Lichtstrahlen emittierender Sender und ein Lichtstrahlen empfangender Empfänger zur Erfassung von Objekten in einem Überwachungsbereich vorgesehen. Figur 1 zeigt die Strahlachse S der Lichtstrahlen, die über die vordere Stirnseite des Gehäuses 2 in den Überwachungsbereich geführt werden.

Der Sensor 1 wird allgemein in industriellen Umgebungen eingesetzt, beispielsweise an einer Maschine, um dort angeordnete oder geförderte Objekte zu erfassen. Zur Befestigung des Sensors 1 an der Maschine ist eine Befestigungsvorrichtung in Form eines Befestigungswinkels 3 vorgesehen, wobei der Befestigungswinkel 3 in bekannter Weise mit einem unteren Schenkel 3a an einer Unterlage, die von einem Teil der Maschine gebildet ist, befestigt wird. Der Befestigungswinkel 3 besteht typischerweise aus einem metallischen Werkstoff.

Der Sensor 1 kann in unterschiedlichen Neigungsstellungen an dem Befestigungswinkel 3 ausgerichtet und dort fixiert werden. Hierzu sind zwei Muttern 4, 5 vorgesehen, die mit Innengewinden 16 auf einem Außengewinde 6 an der Mantelfläche eines kreiszylindrischen Gehäuse-abschnitts des Gehäuses 2 gelagert sind. Die Muttern 4, 5 bestehen aus Kunststoff, insbesondere Polyamid oder Polyoxymethylen. Durch Betätigen der Muttern 4, 5 können diese entlang des Gehäuseabschnitts bewegt werden. Der obere Schenkel 3b des Befestigungswinkels 3 bildet einen Teil eines Befestigungsabschnitts zur Justage und Lagefixierung des Sensors 1. Der obere Schenkel 3b des Befestigungswinkels 3 weist ein kreisförmiges Durchgangsloch 7 auf, durch welches das Gehäuse 2 des Sensors 1 geführt ist. Der Durchmesser des Durchgangslochs 7 ist größer als der Außendurchmesser des Gehäuses 2, d.h. dessen zylindrischer Gehäuseabschnitt liegt mit Spiel in dem Durchgangsloch 7 des oberen Schenkels 3b des Befestigungswinkels 3.

Als weiteres Element des Befestigungsabschnitts ist eine Ausgleichsscheibe 8 vorgesehen, die ebenfalls ein kreisförmiges Durchgangsloch 9 aufweist, dessen Durchmesser größer ist als der Außendurchmesser des zylindrischen Abschnitts des Gehäuses 2. Die Ausgleichsscheibe 8 kann aus Kunststoff oder einem metallischen Werkstoff bestehen. Der zylindrische Gehäuseabschnitt des Gehäuses 2 ist durch die Durchgangslöcher 7, 9 des Schenkels 3b des Befestigungswinkels 3 und der Ausgleichsscheibe 8 geführt.

Die Ausgleichsscheibe 8 ist auf dem oberen Schenkel 3b aufliegend beweglich gelagert.

Die Muttern 4, 5 sind im vorliegenden Fall identisch ausgebildet und spiegelsymmetrisch zum Befestigungsabschnitt auf dem Gehäuseabschnitt positionsverstellbar angeordnet.

Alternativ könnte eine der Muttern 5 auch mit dem Gehäuseabschnitt eine fest verbundene, vormontierte Einheit bilden.

Jede Mutter 4, 5 weist einen konvexen Anlageabschnitt 10 auf, der eine räumlich gekrümmte konvexe Oberfläche aufweist.

Insbesondere weist der Anlageabschnitt 10 jeder Mutter 4, 5 eine Kugelfläche oder eine asphärische Fläche auf.

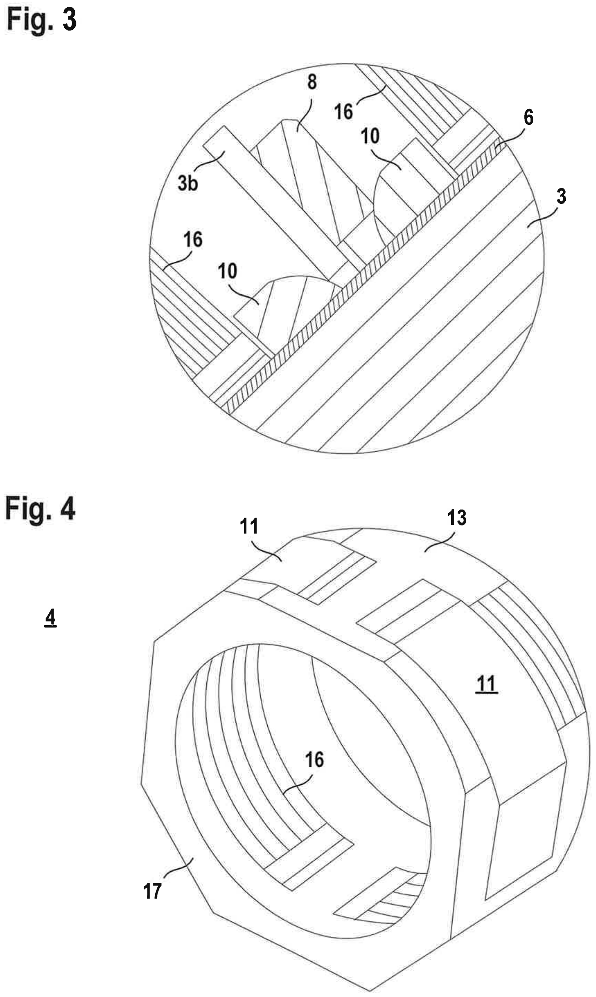

Die Anlageabschnitte 10 der Muttern 4, 5 liegen, wie die Figuren 1 und 2 und insbesondere die Detaildarstellung von Figur 3 zeigen, an den die Durchgangslöcher 7, 9 begrenzenden Randbereichen des Befestigungsabschnitts, d.h. des oberen Schenkels 3b und der Ausgleichsscheibe 8.

Zur Justage des Sensors 1 kann eine Bedienperson die Neigung des Sensors 1 verändern, wobei dabei die Randbereiche des Befestigungsabschnitts auf den Anlageabschnitten 10 gleiten. Diese Justage erfolgt, wenn die Anlageabschnitte 10 nur mit geringem Anpressdruck am Befestigungsabschnitt anliegen. Sobald die gewünschte Neigung des Sensors 1 eingestellt ist, werden die Muttern 4, 5 fest gegen den Befestigungsabschnitt angezogen, so dass dann die Neigung des Sensors 1 fest eingestellt ist.

Die Figuren 4 bis 6 zeigen eine der Muttern 4 in einer Einzeldarstellung. Die Komponenten der Mutter 4 sind von nur einem Kunststoff-Spritzgussteil gebildet. Erfindungsgemäß weist die Mutter 4 ein Schnappgewinde auf, das zwischen einer Öffnungs- und Schließstellung bewegt werden kann. Bei geöffnetem Schnappgewinde kann die Mutter 4 auf den Gehäuseabschnitt aufgeschoben werden. Bei geschlossenem Schnappgewinde ist dieses in Eingriff mit dem Außengewinde 6 des Gehäuseabschnitts.

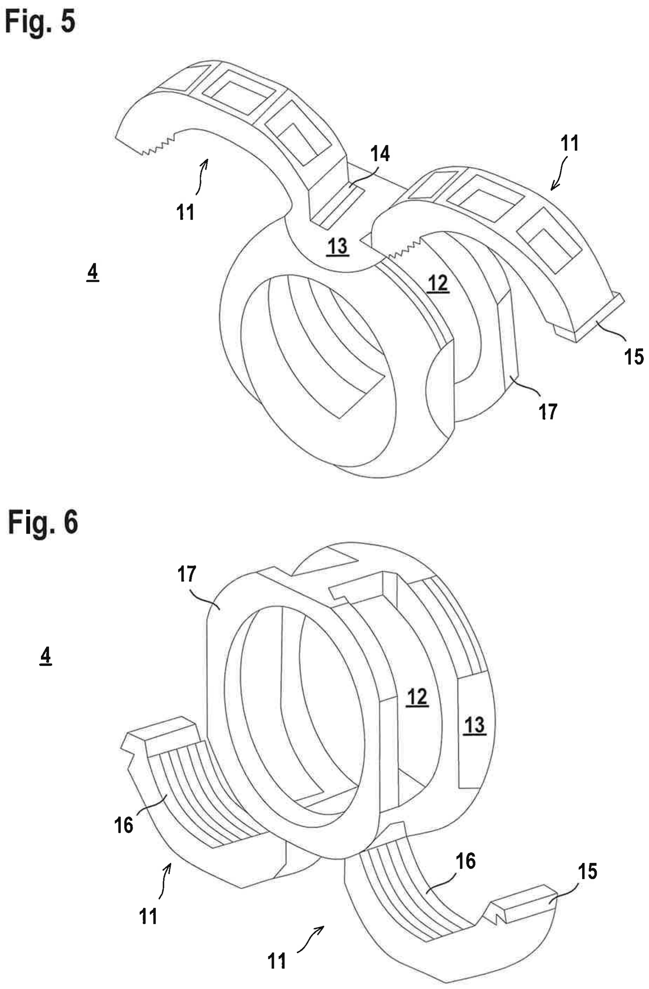

Zur Ausbildung des Schnappgewindes weist die Mutter 4 zwei identisch ausgebildete Gewindeflügel 11 auf, die in ihrer Schließstellung in eine Aussparung 12 in einem Grundkörper 13 der Mutter 4 eingeklappt sind (Figur 4). Die Aussparung 12 verläuft in Umfassungsrichtung der Mutter 4, wie die Figuren 5 und 6 zeigen. Prinzipiell könnte das Schnappgewinde auch nur von einem Gewindeflügel 11 gebildet sein.

Die Gewindeflügel 11 verlaufen in Umfangsrichtung der Mutter 4 und sind in Form kreiszylindrischer Segmente ausgebildet.

Jeder Gewindeflügel 11 ist mit einem längsseitigen Ende mittels eines Filmscharniers 14 gelenkig an den Grundkörper 13 angebunden. Am freien Ende des Gewindeflügels 11 befindet sich ein Rasthaken 15.

An der Innenseite jedes Gewindeflügels 11 befindet sich ein Innengewinde 16. Am Grundkörper 13 selbst ist kein Innengewinde 16 vorgesehen.

In ihrer Öffnungsstellung sind die Gewindeflügel 11 aus der Aussparung 12 herausgeklappt (Figuren 5 und 6), so dass die Mutter 4 auf den Gehäuseabschnitt aufgeschoben werden kann.

In der Schließstellung sind die Gewindeflügel 11 in die Aussparung 12 eingeklappt und dort mit den Rasthaken 15 gesichert. Die Gewindeflügel 11 ergänzen sich dann mit dem Grundkörper 13 zu einem holzylindrischen Körper. In der Schließstellung sind die Innengewinde 16 der Gewindeflügel 11 in Eingriff mit dem Außengewinde 6 des Gehäuseabschnitts.

Der Grundkörper 13 der Mutter 4 wird an seinen Rändern von einem Rahmen 17 begrenzt, der die Stabilität der Mutter 4 erhöht. Der Rahmen 17 weist eine polygonale Außenkontur auf, wodurch die Mutter 4 mit einem Maulschlüssel betätigt werden kann.

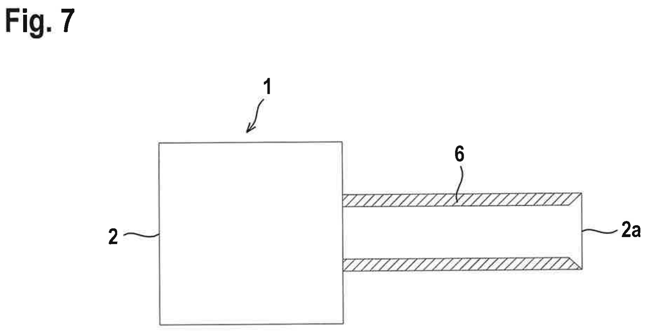

Figur 7 zeigt ein Ausführungsbeispiel eines Sensors 1 mit einem kubischen Gehäuse 2, an dessen Rückseite ein kreiszylindrischer Gehäuseansatz 2a mit einem Außengewinde 6 ausmündet. In diesem Fall bildet der Gehäuseansatz 2a den Gehäuseabschnitt, der in der Befestigungsvorrichtung der Figuren 1 und 2 neigungsverstellbar gelagert ist.

### Bezugszeichenliste

- (1): Sensor
- (2): Gehäuse
- (2a): Gehäuseansatz
- (3): Befestigungswinkel
- (3a): untere Schenkel
- (3b): obere Schenkel
- (4): Mutter
- (5): Mutter
- (6): Außengewinde
- (7): Durchgangsloch
- (8): Ausgleichsscheibe
- (9): Durchgangsloch
- (10): Anlageabschnitt
- (11): Gewindeflügel
- (12): Aussparung
- (13): Grundkörper
- (14): Filmscharnier
- (15): Rasthaken
- (16): Innengewinde
- (17): Rahmen
- (100): Sensoranordnung

- (S): Strahlachse

## Patentansprüche

1. Sensoranordnung (100) mit einem ein Gehäuse (2) aufweisenden Sensor (1) und mit einer Befestigungsvorrichtung, mittels derer der Sensor (1) an einer Unterlage befestigbar ist, wobei der Sensor (1) einen Gehäuseabschnitt mit einer kreiszylindrischen Außenkontur aufweist, wobei die Befestigungsvorrichtung einen Befestigungsabschnitt mit einem Durchgangsloch (7, 9) aufweist, in welchem der Gehäuseabschnitt mit Spiel gelagert ist, und mit zwei jeweils einen konvexen Anlageabschnitt (10) aufweisenden Muttern (4, 5), die beidseits des Befestigungsabschnitts mit einstellbarem Abstand zueinander auf dem Gehäuseabschnitt gelagert sind, so dass die konvexen Anlageabschnitte (10) am Befestigungsabschnitt anliegen, wobei bei geringem Anpressdruck der Anlageabschnitte (10) am Befestigungsabschnitt der Sensor (1) am Befestigungsabschnitt lageverstellbar ist, und wobei durch Festklemmen des Befestigungsabschnitts zwischen den Anlageabschnitten (10) der Sensor (1) lagefixiert ist, **dadurch gekennzeichnet, dass** wenigstens eine der Muttern (4, 5) ein Schnappgewinde aufweist.

2. Sensoranordnung (100) nach Anspruch 1, **dadurch gekennzeichnet, dass** eine oder jede Mutter (4, 5) mit deren Schnappgewinde auf einem Außengewinde (6) des Gehäuseabschnitts fixierbar ist, wobei bei geöffnetem Schnappgewinde die Mutter (4, 5) auf das Außengewinde (6) aufschiebbar ist.

3. Sensoranordnung (100) nach einem der Ansprüche 1 oder 2, **dadurch gekennzeichnet, dass** eine erste Mutter (4) eine auf dem Gehäuseabschnitt gelagerte vormontierte Einheit mit dem Gehäuse (2) des Sensors (1) bildet, und dass eine weitere Mutter (5) ein Schnappgewinde aufweist, wobei die erste Mutter (4) fest mit dem Gehäuseabschnitt verbunden ist, und dass die zweite Mutter (5) mit dem Schnappgewinde positionsverstellbar auf dem Gehäuseabschnitt lagerbar ist.

4. Sensoranordnung (100) nach einem der Ansprüche 1 oder 2, **dadurch gekennzeichnet, dass** zwei Muttern (4, 5) mit jeweils einem Schnappgewinde vorhanden sind.

5. Sensoranordnung (100) nach einem der Ansprüche 1 bis 4, **dadurch gekennzeichnet, dass** die oder jede Mutter (4, 5) mit Schnappgewinde einen Grundkörper (13) aufweist, an welchem wenigstens ein Gewindeflügel (11) klappbar gelagert ist, an dessen Innenseite ein Innengewinde (16) vorhanden ist, wobei in einer Öffnungsstellung des Gewindeflügels (11) die Mutter (4, 5) auf das Außengewinde (6) des Gehäuseabschnitts aufschiebbar ist, und wobei in einer Schließstellung des Gewindeflügels (11) das Schnappgewinde in Eingriff mit dem Außengewinde (6) des Gehäuseabschnitts ist.

6. Sensoranordnung (100) nach Anspruch 5, **dadurch gekennzeichnet, dass** sich der Gewindeflügel (11) in Umfangsrichtung der Mutter (4, 5) erstreckt.

7. Sensoranordnung (100) nach einem der Ansprüche 5 oder 6, **dadurch gekennzeichnet, dass** ein längsseitiges Ende des Gewindeflügels (11) mittels eines insbesondere als Filmscharnier ausgebildeten Gelenks an den Grundkörper (13) angebunden ist.

8. Sensoranordnung (100) nach Anspruch 7, **dadurch gekennzeichnet, dass** am freien längsseitigen Ende des Gewindeflügels (11) ein insbesondere als Rasthaken ausgebildetes Verriegelungselement vorhanden ist, mittels dessen der Gewindeflügel (11) in der Schließstellung am Grundkörper (13) lagegesichert ist.

9. Sensoranordnung (100) nach einem der Ansprüche 5 bis 8, **dadurch gekennzeichnet, dass** die Mutter (4, 5) zwei an deren Grundkörper (13) gegeneinander klappbare Gewindeflügel (11) aufweist, wobei in einer Schließstellung die Gewindeflügel (11) in eine in Umfangsrichtung des Grundkörpers (13) verlaufende Aussparung (12) eingeklappt sind.

10. Sensoranordnung (100) nach einem der Ansprüche 5 bis 9, **dadurch gekennzeichnet, dass** der Grundkörper (13) der oder jeder Mutter (4, 5) einen Rahmen (17) aufweist, wobei die Außenkontur des Rahmens (17) für eine Betätigung mit einem Maulschlüssel ausgebildet ist.

11. Sensoranordnung (100) nach einem der Ansprüche 1 bis 10, **dadurch gekennzeichnet, dass** jede Mutter (4, 5) aus insbesondere Polyamid oder Polyoxymethylen Kunststoff besteht.

12. Sensoranordnung (100) nach einem der Ansprüche 1 bis 11, **dadurch gekennzeichnet, dass** der Anlageabschnitt (10) jeder Mutter (4, 5) eine Kugelfläche oder eine asphärische Fläche aufweist.

13. Sensoranordnung (100) nach einem der Ansprüche 1 bis 12, **dadurch gekennzeichnet, dass** der Befestigungsabschnitt von einem Schenkel (3a, 3b) eines Befestigungswinkels (3) mit einer darauf gelagerten Ausgleichsscheibe (8) gebildet ist, wobei die Ausgleichsscheibe (8) relativ zu dem Schenkel (3a, 3b) beweglich ist.

14. Sensoranordnung (100) nach einem der Ansprüche 1 bis 13, **dadurch gekennzeichnet, dass** der Sensor (1) ein Gehäuse (2) in Form einer zylindrischen Rundhülse aufweist, oder dass der Sensor (1) ein kubisches Gehäuse (2) mit einem daran gelagerten zylindrischen Gehäuseansatz (2a), an welchem der Gehäuseabschnitt vorhanden ist, aufweist.

15. Sensoranordnung (100) nach einem der Ansprüche 1 bis 14, **dadurch gekennzeichnet, dass** der Sensor (1) ein optischer Sensor, ein Ultraschallsensor oder ein induktiver Sensor ist.
